Europäisches Patentamt

European Patent Office

Office européen des brevets

(11) Publication number: **0 445 722 A2**

(12) **EUROPEAN PATENT APPLICATION**

(21) Application number: 91103297.7

(22) Date of filing: 05.03.91

(51) Int. Cl.5: **B60S 3/00**

(30) Priority: **07.03.90 IT 1959690**

(43) Date of publication of application:
**11.09.91 Bulletin 91/37**

(84) Designated Contracting States:
**BE DE ES FR GB IT NL SE**

(71) Applicant: SANITAS EG. S.n.c. di TONANI e C.
Via Piemonte 2, Zona Industriale Sesto
Ulteriano
I-20098 San Giuliano Milanese, Milano(IT)

(72) Inventor: Pastore, Mauro
Via Dante 17/10
I-20098 San Giuliano Milanese (Milano)(IT)

(74) Representative: Modiano, Guido et al
MODIANO, JOSIF, PISANTY & STAUB
Modiano & Associati Via Meravigli, 16
I-20123 Milano(IT)

(54) Process and machine for collecting dust and cleaning the interior of vehicles, in particular of the type intended for public transportation.

(57) The present invention relates to a process and to a machine for collecting dust and cleaning the interior of vehicles, in particular of the type intended for public transportation. The process consists in introducing inside the vehicle (4) a primary flow of low-pressure air (7) with a high flow-rate, which generates a conveyance current, channelled along a closed path which includes the interior of the vehicle (4), from at least one inlet opening (5) to at least one outlet opening (6). At least one secondary flow of air (9) at a higher pressure and with a lower flow-rate with respect to the primary flow is simultaneously fed into the interior of the vehicle (4). The secondary flow is orientated along at least one direction which intersects the primary flow and affects the floor (4a) of the vehicle so as to generate a turbulent motion which removes dust and objects, which are thus subjected to the conveyance action performed by the primary flow. The air which flows out of the outlet opening (6) is subjected to filtration (17,18) and is introduced again into the vehicle through the inlet opening (5).

Fig.1

The present invention relates to a process and to a machine for collecting dust and cleaning the interior of vehicles, in particular of the type intended for public transportation.

As is known, at the end of every work shift, vehicles intended for public transportation are subjected to an internal cleaning which can be performed manually or with appropriate machines. Manual cleaning, besides being laborious, requires considerable time for being carried out and does not ensure optimum results, particularly with regard to a proper dust collection from the interior of the vehicles.

Due to these reasons, appropriate machines are increasingly used; said machines are generally constituted by a box-like structure in which a main duct is defined; said duct has an inlet which is arranged at one of the openings of the vehicle and an outlet which leads into the atmosphere.

A suction unit is arranged in said main duct and comprises at least one electric fan and a filtration unit. The inlet of the main duct is applied to a door of the vehicle which is arranged proximate to one of its longitudinal ends, whereas the door arranged at the opposite end is kept open. Any other doors are kept closed or connected to the inlet of ducts handled by other suction units.

The actuation of the suction unit produces a flow of air along the interior of the vehicle, and said flow removes dust and loose objects, if any, from said vehicle interior, performing the cleaning operation. The flow of air which escapes from the vehicle, by passing through the filtration unit, is subjected to coarse filtration and then discharged into the atmosphere.

Generally, during the cleaning operation, inside the vehicle, an operator equipped with a pneumatic nozzle which delivers a jet of air at high pressure (2-7 kg/cm²), removes the objects (for example paper) trapped between the supporting structures of the seats, the handrails or other obstacles present inside the vehicles, so that said objects can be removed by the flow of air generated by the suction unit.

Some problems are observed in the use of said known types of machine.

The operator on board the vehicle during the cleaning operation is in fact struck by a strong flow of air which is polluted by dust and bacteria and is also cold in winter months, with severe risks for his health.

Furthermore, although the combination of the high-pressure jet actuated manually and of the flow generated by the suction unit ensures the removal of light objects such as for example sheets of paper, cans or other items, unsatisfactory dust-collection results are achieved in the regions which are not reached by the high-pressure jet, since the flow generated by the suction unit is usually insufficient for removing all the dust.

On the other hand, acting manually with a high-pressure jet on all of the internal surface of the vehicle would entail excessively long times with consequent high costs.

The use of these machines furthermore causes pollution to the atmosphere, since most of the removed dust is not retained by the filtration unit and is discharged into the outer environment.

The aim of the present invention is to solve the problems described above by providing a process and a machine which ensure an adequate cleaning and dust collection of the interior of vehicles without requiring the presence of an operator on board the vehicle during cleaning.

Within the scope of this aim, an object of the invention is to provide a process and a machine which do not pollute the environment.

Another object of the invention is to provide a process and a machine which perform optimum cleaning in an extremely short time.

This aim, these objects and others which will become apparent hereinafter are achieved by a process for collecting dust and cleaning the interior of vehicles, in particular of the type intended for public transportation, characterized in that it consists in introducing, inside the vehicle, a primary flow of low-pressure air with a high flow-rate which generates a conveyance current channelled along a closed path which includes the interior of the vehicle, from at least one inlet opening to at least one outlet opening, and at least one secondary flow of air at a higher pressure and with a lower flow-rate with respect to said primary flow, said secondary flow being orientated along at least one direction which intersects said primary flow and affects the floor of the vehicle to generate a turbulent motion for the removal of dust and of objects which can be subjected to the conveyance action of said primary flow; the air which escapes from said outlet opening being subjected to filtration and being introduced again through said inlet opening.

The process according to the invention can preferably be carried out with a machine characterized in that it comprises a box-like structure which internally defines a main duct which can be sealingly associated with at least one entry opening and with at least one exit opening of the vehicle to be cleaned, in order to define, together with the interior of the vehicle, a closed path, means being provided, along said main duct, for generating a primary flow of low-pressure air with a high flow-rate so as to generate a conveyance current along said closed path, means being furthermore provided for delivering at least one secondary flow of air at a higher pressure and with a reduced flow-rate with respect to said primary flow, said delivery means being insertable inside the vehicle and having at least one delivery outlet which is orientated along a direction which intersects said primary flow and affects the floor of the vehicle, filtration means for purifying the air which flows out of the vehicle being arranged along said main duct.

Further characteristics and advantages of the invention will become apparent from the description of a preferred but not exclusive embodiment of the process according to the invention and of a machine for carrying out this process, illustrated only by way of non-limitative example in the accompanying drawings, wherein:

figure 1 is a schematic sectional plan view of a machine for carrying out the process according to the invention, arranged facing a vehicle to be cleaned;

figure 2 is a view, similar to figure 1, of a further embodiment of the machine for carrying out the process according to the invention, intended for cleaning vehicles having a considerable length, such as for example railcars, subway cars, or the like;

figure 3 is a schematic enlarged sectional view of figure 1, taken along the axis III-III;

figures 4 and 5 are schematic enlarged sectional views of figure 1, taken along the axis IV-IV and illustrating the operation of the means for delivering the secondary flow;

figure 6 is a schematic view of a detail of the means for delivering the secondary flow; and

figures 7 and 8 are respectively schematic plan and lateral elevation views of the combined action of the primary flow and of the secondary flow inside the vehicle during cleaning.

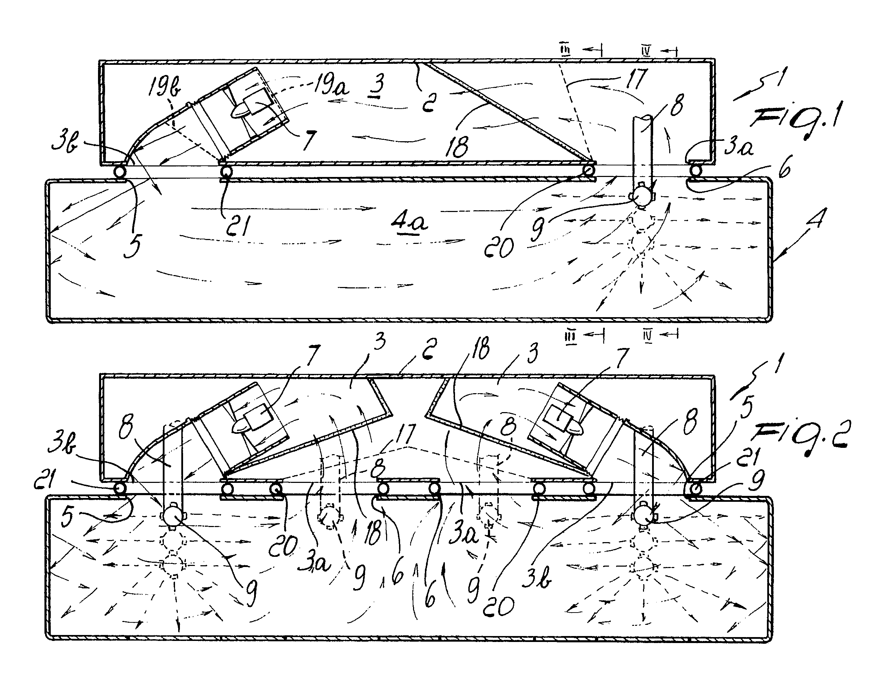

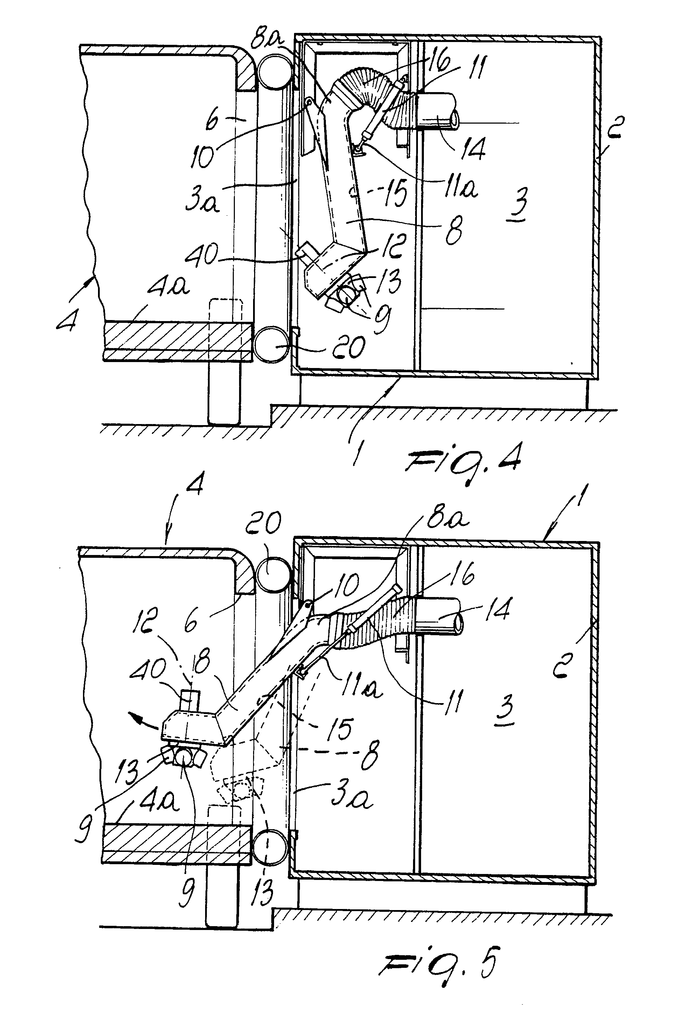

With reference in particular to figures 1, 3, 4, 5 and 6, the machine according to the invention, generally indicated by the reference numeral 1, comprises a box-like structure 2 in which a main duct 3 is defined; said main duct has an inlet 3a and an outlet 3b which are arranged on a same side of the box-like structure which is intended to face the vehicle 4 to be cleaned.

The outlet 3b can be sealingly associated with a door 5 of the vehicle which is arranged proximate to one of its longitudinal ends, whereas the inlet 3a is sealingly associable with a door 6 of the vehicle which is arranged proximate to the opposite end, so that the main duct 3 and the interior of the vehicle 4 constitute a closed path.

Means for generating a primary flow of low-pressure air with a high flow-rate, so as to create a conveyance current along said closed path, are provided along the main duct 3.

The means for generating the primary flow are preferably constituted by a known electric fan 7 arranged proximate to the outlet 3b and orientated so that the primary flow flows out of said outlet.

The machine according to the invention furthermore comprises means for the delivery of at least one secondary flow of air at a higher pressure and with a reduced flow-rate with respect to the primary flow. Said delivery means comprise at least one arm 8 which is supported by the box-like structure 2 and has at least one delivery outlet 9 which can be inserted inside the vehicle 4 and can be orientated so that the secondary flow intersects the primary flow and affects the floor of the vehicle.

The arm 8 is conveniently pivoted inside the box-like structure 2 with its upper end 8a proximate to the inlet 3a. The delivery outlet 9 is mounted on the lower end of the arm 8, which can controllably oscillate about its substantially horizontal pivoting axis 10 with respect to the box-like structure 2 to allow the insertion of the delivery outlet 9 inside the vehicle and in order to vary the height of the delivery outlet 9 from the floor 4a of the vehicle and the inclination with which the secondary flow delivered by the delivery outlet 9 encounters said floor 4a.

The oscillation of the arm 8 about the axis 10 is obtained by means of a fluid-operated cylinder 11 which is fixed to the box-like structure and acts on the arm 8 with the stem 11a of its piston.

The lower end of the arm 8 conveniently supports, so that it can rotate about an axis 12, a delivery head 13 in which a plurality of variously orientated delivery outlets 9 is defined.

More particularly, in the illustrated embodiment, the delivery head 13 has a substantially frustum-like configuration and is arranged below the lower end of the arm 8 with its larger base directed upward. The delivery outlets 9 are distributed along the lateral surface of the head 13, and the axis 12 substantially coincides with the axis of the head 13.

When the axis 12 is arranged vertically, the outlets 9 are orientated so as to be inclined downward, and the rim of said outlets is shaped so that the direction of the secondary flow which flows out of each outlet forms a preset angle with an ideal straight line which connects the center of the delivery outlet to the axis 12. In this manner, the delivery of the secondary flow through the outlets 9 produces a torque which causes the rotation of the head 13 about the axis 12.

According to a further embodiment, the rotation of the head 13 about the axis 12 can also be obtained by means of an electric motor 40 controlled by a programmable microprocessor so that said rotation can be guided according to the cleaning requirements.

As illustrated in particular in figure 6, the output shaft 40a of the motor 40 is coaxially associated with a shaft 41 which is supported so that it can rotate about its own axis, which coincides with the axis 12 and supports the head 13.

By means of the oscillation of the arm 8 it is possible to simultaneously vary the height of the head 13 from the floor 4a of the vehicle and the inclination of the axis 12 with respect to the floor. In this manner, the secondary flow which flows out of the delivery outlets 9 can strike in succession the whole floor and the seats of the vehicle.

The compressed air generated by a known compressor, which is not illustrated for the sake of simplicity, is fed to the delivery outlets 9 through a duct 14 which is connected to a channel 15 extending inside the arm 8 and leading to the delivery head 13. The connection between the duct 14, which is fixed to the box-like structure 2, and the arm 8 is provided by means of a flexible tube 16, for example of the bellows type, to allow the oscillation of the arm 8.

Preferably, the primary flow has a static pressure substantially comprised between 200 and 500 pascal and a flow-rate substantially comprised between 50,000 and 240,000 cu.m./h, whereas the secondary flow has a static pressure substantially comprised between 4,000 and 14,000 pascal with a total flow-rate of 3,000-10,000 cu.m./h. The ratio between the flow-rate of the primary flow and the flow-rate of the secondary flow is preferably comprised between 10 and 50.

Filtration means are arranged along the main duct 3, more particularly upstream of the electric fan 7 along the direction of the primary flow, and are substantially constituted by a first grid filter 17 for coarse filtration and by one or more successive known very fine filters 18 which allow an effective filtration of the air which flows out of the vehicle.

The electric fan 7 can furthermore be protected by means of a pair of grids 19a and 19b arranged on the main duct 3 immediately upstream and downstream of the impeller.

The seal between the inlet 3a and the outlet 3b and the openings of the vehicle is obtained by means of pneumatic rings 20 and 21 of appropriate shape which surround the inlet 3a and the outlet 3b and are interposed between the box-like structure 2 and the vehicle 4 during cleaning.

The machine according to the invention, illustrated in particular in figure 1, is intended for cleaning wheeled vehicles such as buses or the like, and can be mounted on a movable trolley, not illustrated for the sake of simplicity, so that it can be easily arranged next to the vehicle to be cleaned.

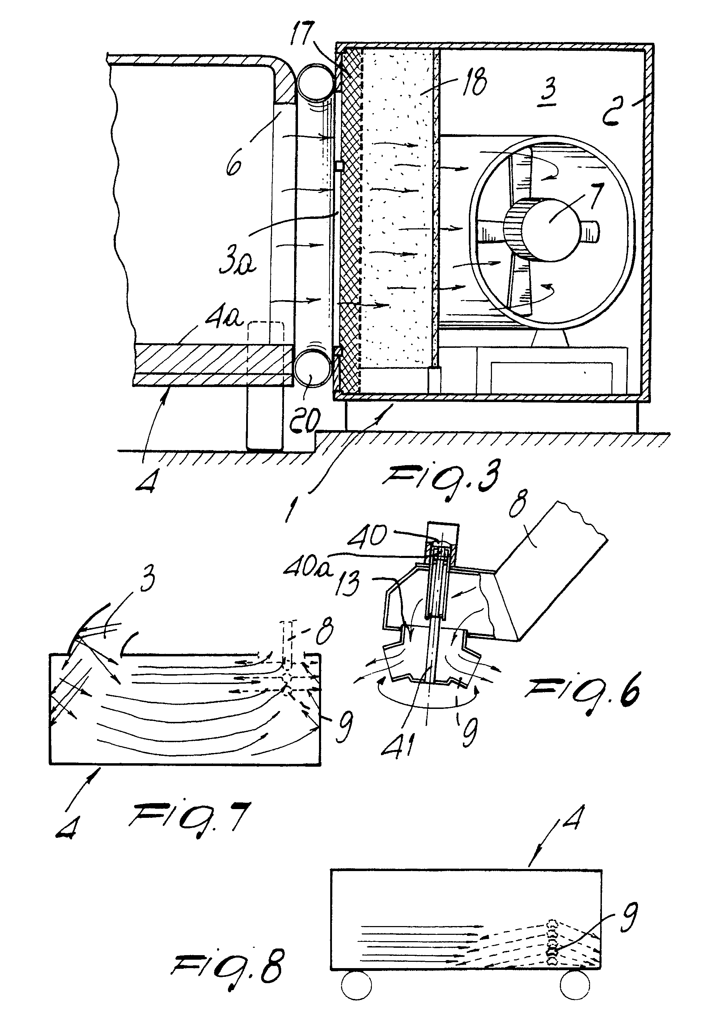

Figure 2 illustrates a machine according to the invention in a further embodiment intended for the cleaning of very long vehicles, such as for example railcars, subway cars or the like.

In this case, the machine is substantially equivalent to the association of two machines of the type illustrated in figure 1. The box-like structure is in fact provided, on a same side, with two inlets 3a and with two outlets 3b to be connected to the four openings of the vehicle. The main duct 3 can be likened to two ducts of the type illustrated in figure 1, each of which has an electric fan 7. In this case, the arms 8 are furthermore arranged proximate to the outlets 3b.

In the case of very long vehicles, it is possible to also provide an arm 8 with a delivery head 13 arranged proximate to one or both of the inlets 3a of the main ducts, so as to have, inside the car, a plurality of means for delivering secondary flows arranged at a distance which is preferably comprised between 4 and 6 meters (figure 2).

In this embodiment, the machine, due to its particular use, can be mounted on a trolley which can move on rails, providing, for the box-like structure, a support which can move perpendicular to the rails. In this manner, the machine-vehicle connection can be performed by arranging the machine on one rail and the vehicle on a parallel rail and by moving the machine along the related rail and transversely thereto until the correct centering of the inlets 3a and of the outlets 3b with respect to the openings of the vehicle is achieved. Said centering can be obtained automatically by means of optical-magnetic sensors arranged on the vehicle and on the machine and connected to a microprocessor which controls the movements of the trolley and of the box-like structure with respect to the vehicle to be cleaned.

In the embodiment illustrated in figure 1 and in the embodiment illustrated in figure 2, the actuations of the electric fan or fans 7, of the fluid-operated cylinder 11 which moves the arm 8, of the compressor which feeds the outlets 9, and of the possible motor 40 which rotates the head 13 can be controlled by a programmable microprocessor capable of performing preset programs according to the cleaning requirements.

The operation of the machine, with reference to the embodiment illustrated in figure 1, in carrying out the process according to the invention, is as follows.

After correctly placing the machine with respect to the vehicle to be cleaned and after providing the seal between the inlet 3a and the outlet 3b and the doors of the vehicle, the fluid-operated cylinder 11 is actuated and causes the oscillation of the arm 8 to insert the head 13 inside the vehicle 4.

The electric fan 7 is then activated and generates the primary flow of air along the closed path defined by the main duct and by the interior of the vehicle 4. The compressor which feeds the delivery outlets 9 is simultaneously actuated, and said outlets 9 deliver the secondary flow of air at a higher pressure but with a reduced flow-rate with respect to the primary flow.

During delivery, by means of the oscillation of the arm 8, the height of the head 13 is changed in a cyclic manner so that successive regions of the floor and of the seats of the vehicle are struck by the secondary flow. The direction of delivery of the secondary flow is furthermore changed by means of the rotation of the head 13 (figures 1, 7, 8).

The secondary flow, by encountering the floor and seats and intersecting the primary flow, generates a turbulence which removes the dust and moves any objects possibly trapped between obstacles of various kinds inside the vehicle. The dust and the objects can thus be conveyed out of the vehicle by the action of the primary flow. The air which flows out of the vehicle is purified by the filters and then returned into the vehicle without polluting the outer environment.

After completing the cleaning operation, which by virtue of the process according to the invention requires a few minutes, the electric fan 7 is deactivated and the arm 8 is returned into the box-like structure 2. The box-like structure 2 is then spaced from the vehicle 4.

In practice it has been observed that the machine and the process according to the invention fully achieve the intended aim, since they allow to achieve effective cleaning in an extremely short time without requiring the presence of operators on board the vehicle subjected to cleaning.

The process and the machine thus conceived are susceptible to numerous modifications and variations, all of which are within the scope of the inventive concept; all the details may furthermore be replaced with technically equivalent elements.

In practice, the materials employed, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for collecting dust and cleaning the interior of vehicles, in particular of the type intended for public transportation, characterized in that it consists in introducing, inside the vehicle, a primary flow of low-pressure air with a high flow-rate which generates a conveyance current, channelled along a closed path which comprises the interior of the vehicle, from at least one inlet opening to at least one outlet opening, and at least one secondary flow of air at a higher pressure and with a lower flow-rate with respect to said primary flow, said secondary flow being orientated along at least one direction which intersects said primary flow and affects the floor of the vehicle to generate a turbulent motion for the removal of dust and of objects which can be subjected to the conveyance action of said primary flow; the air which flows out of said outlet opening being subjected to filtration and being introduced again through said inlet opening.

2. Process according to claim 1, characterized in that said secondary flow is orientated along a direction which is incident to the floor of the vehicle according to a preset angle and in that the height of its delivery point, arranged inside the vehicle, is changed so as to progressively affect a plurality of regions of the floor and intersect said primary flow at different heights.

3. Process according to claims 1 and 2, characterized in that said secondary flow is delivered along a direction which is incident to the floor of the vehicle and rotates about an axis which is in turn incident to said floor.

4. Process according to one or more of the preceding claims, characterized in that the inclination of said axis with respect to the floor of the vehicle is changed during the delivery of said secondary flow.

5. Process according to one or more of the preceding claims, characterized in that said primary flow has a flow-rate which is substantially comprised between 50,000 and 240,000 cu.m./h with a static pressure substantially comprised between 200 and 500 pascal.

6. Process according to one or more of the preceding claims, characterized in that said secondary flow has a flow-rate which is substantially comprised between 3,000 and 10,000 cu.m./h with a static pressure substantially comprised between 4,000 and 14,000 pascal.

7. Process according to one or more of the preceding claims, characterized in that the ratio between the flow-rate of the primary flow and the flow-rate of the secondary flow is preferably comprised between 10 and 50.

8. Machine for collecting dust and cleaning the interior of vehicles, in particular of the type intended for public transportation, characterized in that it comprises a box-like structure (2) which internally defines a main duct (3) which can be sealingly associated with at least one inlet opening (5) and with at least one outlet opening (6) of the vehicle (4) to be cleaned, in order to define, together with the interior of the vehicle (4), a closed path, means (7) being provided, along said main duct (3), for generating a primary flow of low-pressure air with a high flow-rate to generate a conveyance current along said closed path, delivery means (8) being furthermore provided for delivering at least one secondary flow of air at a higher pressure and with a reduced flow-rate with respect to said primary flow, said delivery means (8) being insertable inside the vehicle (4) and being provided with at least one delivery outlet (9) which is orientated along a direction which intersects said primary flow and affects the floor of the vehicle, filtration means (17,18,19a,19b) being arranged along said main duct in order to purify the air which flows out of the vehicle (4).

9. Machine according to claim 8, characterized in that said delivery means comprise an arm (8) which is supported by said box-like structure (2) and is controllably movable with respect to said box-like structure (2) for the insertion and orientation, inside the vehicle (4), of said at least one delivery outlet (9) mounted on said arm (8).

10. Machine according to claims 8 and 9, characterized in that said delivery means comprise a delivery head (13) which is associated with an end of said arm (8) and in which delivery outlets (9) are defined, said outlets (9) being fed by a channel (15) which extends inside said arm (8).

11. Machine according to one or more of the preceding claims, characterized in that said delivery head (13) is supported by said arm (8) so as to be able to rotate about an axis (12) which is incident to the floor of the vehicle, with said delivery head (13) inserted in the vehicle (4), said delivery outlets (9) being arranged around said axis (12).

12. Machine according to one or more of the preceding claims, characterized in that said delivery outlets (9) are orientated along directions which are inclined with respect to a direction which is radial to said axis (12) for a rotation of said head (13) about said axis (12) upon the delivery of said secondary flow through said delivery outlets (9).

13. Machine according to one or more of the preceding claims, characterized in that it comprises actuation means (40) which act on said delivery head (13) for its rotation about said axis (12) with respect to said arm (8).

14. Machine according to one or more of the preceding claims, characterized in that it comprises means (11) for varying the height of said head (13) with respect to the floor (4a) of the vehicle (4).

15. Machine according to one or more of the preceding claims, characterized in that it comprises means (11) for varying the inclination of said axis (12) with respect to the floor (4a) of the vehicle (4).

16. Machine according to one or more of the preceding claims, characterized in that said arm (8) is pivotally associated to said box-like structure (2) with its end (8a) which is opposite to said delivery head (13), said arm (8) being able to oscillate, by virtue of controllably activatable actuation means (11), about a substantially horizontal oscillation axis (10) to insert said delivery head (13) into the vehicle (4) and to vary the height of said delivery head (13) and the inclination of its axis (12) of rotation with respect to the floor (4a) of the vehicle (4).

17. Machine according to one or more of the preceding claims, characterized in that it comprises a plurality of means (8) for delivering secondary flows which can be introduced in said vehicle (4) through said inlet opening (5) and/or outlet opening (6) of the vehicle (4).

18. Machine according to one or more of the preceding claims, characterized in that said means for delivering secondary flows (8) can be arranged inside the vehicle (4) so as to be mutually spaced by substantially 4 to 6 meters.

Fig.1

Fig.2

Fig.3

Fig.7

Fig.6

Fig.8

Fig. 4

Fig. 5